# EUROPÄISCHE PATENTSCHRIFT

(11) **EP 3 395 665 B1**
(45) Veröffentlichungstag und Bekanntmachung des Hinweises auf die Patenterteilung: **01.01.2020**
(21) Anmeldenummer: 18167109.0
(22) Anmeldetag: 12.04.2018
(51) Int. Cl.: B62M 6/55, B62K 19/34, H02K 5/18

(54) **KÜHLUNG FÜR ANTRIEB EINES ELEKTROFAHRRADS**
DISSIPATION OF HEAT FROM A DRIVE FOR ELECTRIC BICYCLE
DISSIPATION THERMIQUE D'UN ENTRAÎNEMENT POUR BICYCLETTE ÉLECTRIQUE

(30) Priorität: 27.04.2017 DE 102017207154
(43) Veröffentlichungstag der Anmeldung: 31.10.2018
(73) Patentinhaber: Robert Bosch GmbH, 70442 Stuttgart (DE)
(72) Erfinder: Kimmich, Jens, 72800 Eningen Unter Achalm (DE); Barber, Stephan, 72760 Reutlingen (DE); Schock, Wolfram, 72770 Ohmenhausen (DE)

(56) Entgegenhaltungen:
- DE-A1-102010 026 650
- DE-A1-102013 112 804
- JP-A- H08 244 674

## Beschreibung

### Stand der Technik

Die vorliegende Erfindung betrifft eine Elektroantriebsvorrichtung aufweisend ein Antriebsgehäuse mit Wärmequellen, die im Antriebsgehäuse angeordnet sind.

Außerdem betrifft die Erfindung ein Fahrrad mit einer integrierten Elektroantriebsvorrichtung.

Aus dem Stand der Technik sind Elektrofahrräder, auch eBikes genannt, mit unterschiedlichen Antriebskonzepten bekannt. Bei den Antriebskonzepten wird zwischen Vorderradnabenantrieben, Hinterradantrieben und Mittelmotoren unterschieden. Dabei sind die Antriebe außerhalb des Fahrradrahmens platziert und werden oft als optisch störender Fremdkörper empfunden.

Die Antriebe können als im Fahrradrahmen integrierte Antriebe ausgebildet sein. Dies hat den Vorteil, dass die Antriebe als optisch nicht störend empfunden werden und gut vor Schmutz und Feuchtigkeit geschützt sind. Nachteilig wirkt sich aus, dass die im Antrieb entstehende Wärme, also Abwärme, nur schlecht abgeführt werden kann, weshalb die Leistungsabgabe reduziert werden muss, um so eine Überhitzung zu vermeiden. Das Dokument DE 10 2013 112 804 A1 zeigt ein gattungsgemäßes Elektrofahrrad mit einer Kühlvorrichtung nach den Merkmalen der Präambel des Anspruchs 1.

### Offenbarung der Erfindung

Die Erfindung geht aus von einer Elektroantriebsvorrichtung nach Gattung des unabhängigen Anspruchs 1. Ferner geht die Erfindung aus von einem Fahrrad nach Gattung des abhängigen Anspruchs 9. Ferner geht die Erfindung aus von einem Verfahren nach Gattung des unabhängigen Anspruchs 10.

Unter einer Elektroantriebsvorrichtung sei im Rahmen der Erfindung eine elektrische Antriebseinheit für ein Fahrrad zu verstehen. Bei der Elektroantriebsvorrichtung erfolgt ein Zusammenwirken von wesentlichen Bauteilen, wie elektrischer Antrieb, Akkumulator und Steuereinheit.

Unter Wärmequellen seien im Rahmen der Erfindung die im Antriebsgehäuse eingebauten Komponenten zu verstehen, die Wärme emittieren. Vorzugsweise ist eine erste Wärmequelle als elektrischer Motor ausgebildet. Bevorzugt ist eine zweite Wärmequelle als Leistungselektronik ausgebildet.

Unter einer Kühllamelle sei im Rahmen der Erfindung ein Bauteil zu verstehen, das eingerichtet ist, Wärme von den Wärmequellen aufzunehmen und die aufgenommene Wärme wieder abzugeben. Kühllamellen können als Kühlkörper verstanden werden. Ein Kühlkörper vergrößert die wärmeabgebende Oberfläche eines wärmeproduzierenden Bauteils. Damit kann die integrierte Elektroantriebsvorrichtung länger und ohne Überhitzen betrieben werden, wodurch eine konstante Leistungsabgabe ermöglicht wird. Folglich kann die Elektroantriebsvorrichtung als integrierte Vorrichtung auch in Fahrradrahmen aus Kohlefasern verwendet werden, die Wärme bekanntermaßen noch schlechter ableiten als metallische Rahmen.

Unter einer Abgabe nach außerhalb des Antriebsgehäuses kann eine Wärmetransport vom Inneren des Antriebsgehäuses über Komponenten der Elektroantriebsvorrichtung an die Umwelt verstanden werden.

Vorzugsweise sind die ersten Lamellen und die zweiten Lamellen als nahe beieinanderliegende Lamellen ausgebildet. Unter einem kontaktfreien Ineinandergreifen ist ein berührungsloses und schleiffreies Vorsehen der ersten und zweiten Lamellen zueinander zu verstehen. Dabei liegen Oberflächen der ersten und zweiten Lamellen einander gegenüber.

Vorzugsweise sind die ersten und zweiten Lamellen aus einem wärmeleitfähigen Material gefertigt, insbesondere Aluminium. Aluminium hat den Vorteil, dass es eine hohe Wärmeleitfähigkeit aufweist. Alternativ bestehen die ersten und zweiten Lamellen aus einer Legierung, bspw. einer Aluminiumlegierung. Damit lässt sich auch eine ausreichende Kühlung bewerkstelligen. Durch das Vorhandensein von Wärmequellen erfährt das Antriebsgehäuse eine starke Erwärmung. Durch das Vorsehen der ersten und zweiten Lamellen, ist ein Wärmeübergang von den ersten Lamellen auf die zweiten Lamellen ermöglicht.

Die im Inneren der Elektroantriebsvorrichtung, insbesondere der Antriebseinheit erzeugte Wärme wird über nahe beieinanderliegende Lamellen übertragen. Durch diese zueinander beweglich angeordneten Komponenten kann die Wärme vom Inneren des Antriebsgehäuses nach außerhalb des Antriebsgehäuses übertragen werden, um dort im Fahrtwind an die Luft abgegeben zu werden.

Hierdurch lässt sich Wärme auf einfache Weise von innerhalb der Vorrichtung an die Umgebung nach außerhalb der Vorrichtung abführen, was zu einer Abkühlung in der Elektroantriebsvorrichtung führt.

Die Unteransprüche zeigen bevorzugte Weiterbildungen der Erfindung.

Vorteilhaft sind die ersten Lamellen parallel zu den zweiten Lamellen angeordnet. Hierdurch ist es möglich, dass die im Antriebsgehäuse entstandene Wärme effizient von der ersten Lamelle zur zweiten Lamelle übertragbar ist.

Weiter vorteilhaft sind die zweiten Lamellen radial an der Kurbelwelle angeordnet. Durch das Vorsehen der zweiten Lamellen in einer radialen Richtung an der Kurbelwelle lässt sich vorzugsweise infolge einer Drehbewegung der Kurbelwelle Wärme von den ersten Lamellen auf die zweiten Lamellen auf einfache Weise übertragen.

Alternativ sind die zweiten Lamellen in einem Winkel zur Kurbelwelle auf der Kurbelwelle angeordnet, wobei auch die ersten Lamellen entsprechend am Antriebsgehäuse orientiert sind. Hierdurch wird eine weitere Möglichkeit vorgestellt, die Lamellen am/im Antriebsgehäuse anzuordnen.

Weiter vorteilhaft weist die Elektroantriebsvorrichtung eine Kurbel auf und die zweiten Lamellen sind eingerichtet, im und/oder am Antriebsgehäuse entstehende Wärme von den ersten Lamellen über die Kurbelwelle an die Kurbel abzugeben. Auf diese Weise wird eine einfache Möglichkeit bereitgestellt, Wärme, die bei Inbetriebnahme des Fahrrads im Inneren des Antriebsgehäuses erzeugt wird, vom Antriebsgehäuse nach außerhalb des Antriebsgehäuses zu fördern.

Weiter vorteilhaft ist ein Kettenblatt, das mit einer Hohlwelle, die zumindest teilweise in das Antriebsgehäuse ragt, verbunden ist, drehbar auf der Kurbelwelle angeordnet. Bevorzugt ist eine Mantelfläche der Hohlwelle koaxial zu einer Mittelachse der Kurbelwelle angeordnet. Besonders bevorzugt ist die Mantelfläche der Hohlwelle stirnseitig mit dem Kettenblatt verbunden. Durch das Vorsehen der drehbar gelagerten Hohlwelle ist ein Freilauf auf einfache Weise ausführbar.

Weiter vorteilhaft sind die zweiten Lamellen radial an der Hohlwelle angeordnet. Durch das Vorsehen der zweiten Lamellen in einer radialen Richtung an der Hohlwelle lässt sich vorzugsweise infolge einer Drehbewegung der Hohlwelle Wärme von den ersten Lamellen auf die zweiten Lamellen auf einfache Weise übertragen. Die ersten Lamellen und die zweiten Lamellen greifen auch hier kontaktfrei ineinander.

Weiter vorteilhaft weist das Kettenblatt Kühlrippen auf. Hierdurch ist es möglich, einen Kühleffekt zusätzlich zu verstärken. Die Kühlrippen dienen der Vergrößerung der Oberfläche des Kühlkörpers. Mittels der Kühlrippen lässt sich eine Wärmeübertragung an die Umgebung und damit eine Kühlung innerhalb der Elektroantriebsvorrichtung auf einfache Weise ausführen. Vorzugsweise ist das Kettenblatt aus einem wärmeleitfähigen Material gefertigt, insbesondere Aluminium. Aluminium hat den Vorteil, dass es eine hohe Wärmeleitfähigkeit aufweist. Alternativ bestehen das Kettenblatt aus einer Legierung, bspw. einer Aluminiumlegierung. Damit lässt sich auch eine ausreichende Kühlung bewerkstelligen. Bevorzugt weist das Kettenblatt einen Befestigungsstern (=Spider) auf. Besonders bevorzugt ist auch der Befestigungsstern mit Kühlrippen versehen.

Weiter vorteilhaft sind die zweiten Lamellen eingerichtet, im und/oder am Antriebsgehäuse entstehende Wärme von den ersten Lamellen über die Hohlwelle an das Kettenblatt abzugeben. Auf diese Weise wird eine einfache Möglichkeit bereitgestellt, Wärme, die bei Inbetriebnahme des Elektrofahrrads im Inneren des Antriebsgehäuses erzeugt wird, vom Antriebsgehäuse nach außerhalb des Antriebsgehäuses zu fördern.

Weiter vorteilhaft ist die Elektroantriebsvorrichtung zwischen einem Unterrohr, einem Sitzrohr und einer Kettenstrebe des Fahrrads angeordnet. Damit lässt sich die Elektroantriebsvorrichtung auf einfache Weise im Fahrradrahmen integrieren.

Mit dem Verfahren zum Abführung von im und/oder am Antriebsgehäuse der Elektroantriebsvorrichtung erzeugter Wärme nach außerhalb des Antriebsgehäuses werden Möglichkeiten bereitgestellt, Wärme, die bei Inbetriebnahme des Fahrrads im Inneren des Antriebsgehäuses erzeugt wird, vom Antriebsgehäuse nach außerhalb des Antriebsgehäuses zu fördern.

Die von den Wärmequellen (elektrischer Motor und/oder Leistungselektronik) erzeugte Wärme kann direkt auf das Antriebsgehäuse abgegeben werden, wenn die Wärmequellen am Antriebsgehäuse befestigt sind. Die von den Wärmequellen (elektrischer Motor und/oder Leistungselektronik) erzeugte Wärme kann direkt auf die Lamellen abgegeben werden, wenn die Wärmequellen mit dem Antriebsgehäuse nicht direkt befestigt sind.

Die im Inneren des Antriebsgehäuses erzeugte Wärme wird über nahe beieinanderliegende Lamellen und an die beweglichen Teile Kurbelwelle und Hohlwelle übertragen. Durch diese metallischen und zueinander beweglich angeordneten Komponenten wird die Wärme vom Inneren des Antriebsgehäuses nach außen an die Anbauteile Kettenblatt und Kurbel übertragen, um dort im Fahrtwind an die Luft abgegeben zu werden. Kurbel und Kettenblatt können mit Kühlrippen für eine bessere Wärmeabgabe an die Luft optimiert werden. Durch die Rotation von Kurbel und Kettenblatt während des Betriebs wird eine gewisse Bewegungsgeschwindigkeit der Luft zusätzlich zum Fahrtwind sichergestellt.

### Kurze Beschreibung der Zeichnung

Nachfolgend werden Ausführungsbeispiele der Erfindung unter Bezugnahme auf die begleitende Zeichnung im Detail beschrieben. In der Zeichnung ist:

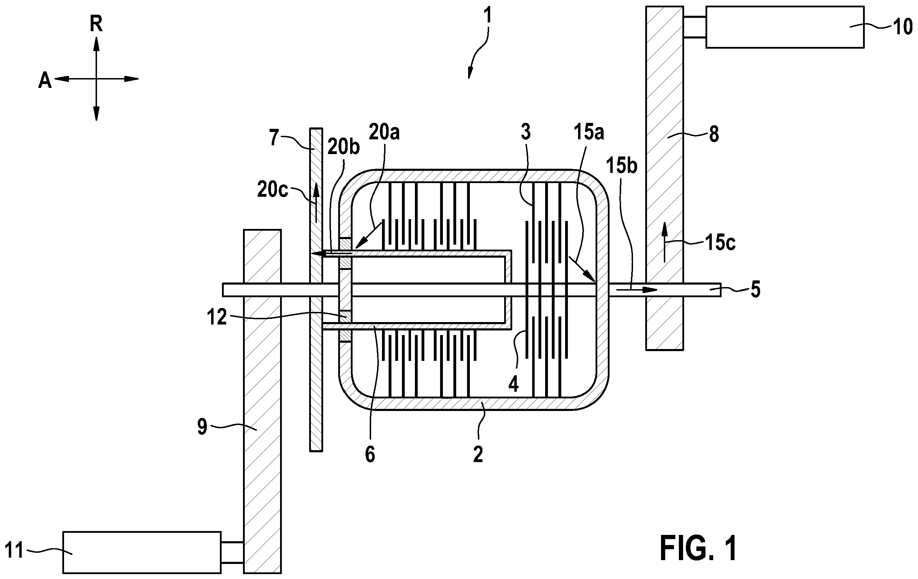

- Figur 1: eine schematische Ansicht einer ersten erfindungsgemäßen Ausführungsform der Erfindung.

### Ausführungsform der Erfindung

Figur 1 zeigt eine schematische Ansicht einer ersten erfindungsgemäßen Elektroantriebsvorrichtung 1. Die Elektroantriebsvorrichtung 1 ist zwischen einem Unterrohr, einem Sitzrohr und einer Kettenstrebe des Rahmens eines Fahrrads integriert (die Teile des Fahrrads sind nicht gezeigt). Die Elektroantriebsvorrichtung 1 weist ein Antriebsgehäuse 2 mit integrierten Wärmequellen (nicht gezeigt) auf. Eine erste Wärmequelle 3 ist ein elektrischer Motor, der in einem Motortopf 4 des Antriebsgehäuses 2 angeordnet ist. Eine zweite Wärmequelle 8 ist eine Leistungselektronik, die im Antriebsgehäuse 2 angeordnet ist.

Die Elektroantriebsvorrichtung 1 weist eine durch das Antriebsgehäuse 2 geführte Kurbelwelle 6 auf. Das Antriebsgehäuse 2 weist erste Lamellen 3 auf. Die erste Lamelle 3 besteht aus Metall, nämlich Aluminium. Die ersten Lamellen 3 sind innerhalb des Antriebsgehäuses 2 am Antriebsgehäuse 2 in einer radialen Richtung R angeordnet sind. Die Kurbelwelle 5 weist zweite Lamellen 4 auf. Die zweite Lamelle 4 besteht aus Metall, nämlich Aluminium. Die zweiten Lamellen 4 sind innerhalb des Antriebsgehäuses 2 zur Abführung von im Antriebsgehäuse 2 erzeugter Wärme nach außerhalb des Antriebsgehäuses 2 drehbar in radialer Richtung R gelagert. Dabei greifen die ersten Lamellen 3 und die zweiten Lamellen 4 kontaktfrei ineinander.

Die ersten Lamellen 3 sind parallel zu den zweiten Lamellen 4 angeordnet, wobei die ersten Lamellen 3 und die zweiten Lamellen 4 nahe beieinanderliegend angeordnet sind. Die zweiten Lamellen 4 sind radial an der Kurbelwelle 5 angeordnet. Die Kurbelwelle 5 erstreckt sich in ihrer Längsachse in einer axialen Richtung A. Dabei kragen die zweiten Lamellen 4 in Richtung zum Antriebsgehäuse 2 aus.

Die Elektroantriebsvorrichtung 1 weist eine Kurbel 8, 9 auf. Die zweiten Lamellen 4 sind eingerichtet, im und am Antriebsgehäuse 2 entstehende Wärme von den ersten Lamellen 3 über die Kurbelwelle 5 an die Kurbel 8, 9 abzugeben. An die Kurbeln 8, 9 angeschlossen sind Pedale 10, 11, die thermisch von den Kurbeln 8, 9 entkoppelt sind. Dabei stellt sich ein Wärmetransport gemäß den Pfeilen 15a bis 15c ein. Der Wärmetransport kann dabei über die Kurbel 8 als auch über die Kurbel 9 erfolgen. Die Wärme wird dabei insbesondere über beide Kurbeln 8, 9 nach außen an die Umwelt abgegeben.

Auf diese Weise wird eine einfache Möglichkeit bereitgestellt, Wärme, die bei Inbetriebnahme des Fahrrads im Inneren des Antriebsgehäuses 2 erzeugt wird, vom Antriebsgehäuse 2 nach außerhalb des Antriebsgehäuses 2 zu fördern.

Ferner weist die Elektroantriebsvorrichtung 1 ein Kettenblatt 7 und eine Hohlwelle 6 auf. Das Kettenblatt 7 ist mit der Hohlwelle 6 verbunden und drehbar auf der Kurbelwelle 5 angeordnet. Die Hohlwelle 6 ragt dabei zumindest teilweise in das Antriebsgehäuse 2. Durch das Vorsehen eines Lagers 12 ist die Hohlwelle 6 am Antriebsgehäuse 2 drehbar gelagert. Die ersten Lamellen 3 und die zweiten Lamellen 4 greifen kontaktfrei ineinander. Die ersten Lamellen 3 sind parallel zu den zweiten Lamellen 4 angeordnet, wobei die ersten Lamellen 3 und die zweiten Lamellen 4 nahe beieinanderliegend angeordnet sind.

Die zweiten Lamellen 4 sind radial an der Hohlwelle 6 angeordnet. Dabei kragen die zweiten Lamellen 4 in Richtung zum Antriebsgehäuse 2 aus. Das Kettenblatt 7 weist Kühlrippen auf. Insbesondere weist das Kettenblatt 7 einen Befestigungsstern (=Spider) auf, der ebenfalls mit Kühlrippen oder Kühllamellen versehen ist.

Die zweiten Lamellen 4 sind eingerichtet, im und am Antriebsgehäuse 2 entstehende Wärme von den ersten Lamellen 3 über die Hohlwelle 6 an das Kettenblatt 7 abzugeben. Dabei stellt sich ein Wärmetransport gemäß den Pfeilen 20a bis 20c ein. Der Wärmetransport kann dabei über das Kettenblatt 7 erfolgen. Die Wärme wird dabei insbesondere über das Kettenblatt 7 nach außen an die Umwelt abgegeben.

Auf diese Weise wird weiter eine einfache Möglichkeit bereitgestellt, Wärme, die bei Inbetriebnahme des Elektrofahrrads im Inneren des Antriebsgehäuses 2 erzeugt wird, vom Antriebsgehäuse 2 nach außerhalb des Antriebsgehäuses 2 zu fördern.

Um im Antriebsgehäuse 2 erzeugte Wärme nach außerhalb des Antriebsgehäuse 2 der Elektroantriebsvorrichtung 1 abzuführen, werden folgende Schritte durchlaufen:
- Abführen von im und am Antriebsgehäuse 2 erzeugter Wärme von den ersten Lamellen 3 über die zweiten Lamellen 4 zur Kurbelwelle 5 an die Kurbel 8, 9 und
- Abführen der im und am Antriebsgehäuse 2 erzeugten Wärme von den ersten Lamellen 3 über die zweiten Lamellen 4 zur Hohlwelle 6 an ein Kettenblatt 7.

Die im Inneren des Antriebsgehäuses 2 erzeugte Wärme wird über die nahe beieinanderliegenden Lamellen 3 und 4 an die beweglichen Teile Kurbelwelle 5 und Hohlwelle 6 übertragen. Durch diese metallischen und zueinander beweglich angeordneten Komponenten wird die Wärme vom Inneren des Antriebsgehäuses 2 nach außen an die Anbauteile Kettenblatt 7 und Kurbel 8, 9 übertragen, um dort im Fahrtwind an die Luft abgegeben zu werden. Kurbel 8, 9 und Kettenblatt 7 können mit Kühlrippen für eine bessere Wärmeabgabe an die Luft optimiert werden.

Bei Inbetriebnahme des Fahrrads, also bei Betätigung des Fahrrads, wird durch die Rotation von Kurbel 8, 9 und Kettenblatt 7 während des Betriebs wird eine gewisse Bewegungsgeschwindigkeit der Luft zusätzlich zum Fahrtwind sichergestellt. Hierbei wird die Wärme als Warmluft an die Umgebung abgegeben.

Während die vorliegende Erfindung anhand der beigefügten Figuren ausführlich und detailliert beschrieben worden ist, bleibt der Schutzbereich der vorliegenden Erfindung allein durch die beigefügten Ansprüche beschränkt.

## Patentansprüche

1. Elektroantriebsvorrichtung (1) für ein Fahrrad aufweisend eine durch ein Antriebsgehäuse (2) geführte Kurbelwelle (5), wobei das Antriebsgehäuse (2) erste Lamellen (3) aufweist, **dadurch gekennzeichnet, dass**
die ersten Lamellen innerhalb des Antriebsgehäuses (2) am Antriebsgehäuse (2) angeordnet sind und die Kurbelwelle (5) zweite Lamellen (4) aufweist, die innerhalb des Antriebsgehäuses (2) zur Abführung von im Antriebsgehäuse (2) erzeugter Wärme nach außerhalb des Antriebsgehäuses (2) drehbar gelagert sind, wobei die ersten Lamellen (3) und die zweiten Lamellen (4) kontaktfrei ineinander greifen.

2. Elektroantriebsvorrichtung (1) nach Anspruch 1, wobei die ersten Lamellen (3) parallel zu den zweiten Lamellen (4) angeordnet sind.

3. Elektroantriebsvorrichtung (1) nach einem der vorherstehenden Ansprüche, wobei die zweiten Lamellen (4) radial an der Kurbelwelle (5) angeordnet sind.

4. Elektroantriebsvorrichtung (1) nach einem der vorherstehenden Ansprüche, wobei die Elektroantriebsvorrichtung (1) eine Kurbel (8, 9) aufweist und die zweiten Lamellen (4) eingerichtet sind, im und/oder am Antriebsgehäuse (2) entstehende Wärme von den ersten Lamellen (3) über die Kurbelwelle (5) an die Kurbel (8, 9) abzugeben.

5. Elektroantriebsvorrichtung (1) nach einem der vorherstehenden Ansprüche, wobei ein Kettenblatt (7), das mit einer Hohlwelle (6), die zumindest teilweise in das Antriebsgehäuse (2) ragt, verbunden ist, drehbar auf der Kurbelwelle (5) angeordnet ist.

6. Elektroantriebsvorrichtung (1) nach Anspruch 5, wobei die zweiten Lamellen (4) radial an der Hohlwelle (6) angeordnet sind.

7. Elektroantriebsvorrichtung (1) nach Anspruch 6, wobei das Kettenblatt (7) Kühlrippen aufweist.

8. Elektroantriebsvorrichtung (1) nach einem der Ansprüche 5 bis 7, wobei die zweiten Lamellen (4) eingerichtet sind, im und/oder am Antriebsgehäuse (2) entstehende Wärme von den ersten Lamellen (3) über die Hohlwelle (6) an das Kettenblatt (7) abzugeben.

9. Fahrrad aufweisend eine integrierte Elektroantriebsvorrichtung (1) nach einem der vorhergehenden Ansprüche.

10. Verfahren zum Abführung von im Antriebsgehäuse (2) der Elektroantriebsvorrichtung (1) erzeugter Wärme nach außerhalb des Antriebsgehäuses (2) nach einem der vorherstehenden Ansprüche aufweisend die Schritte:
- Abführen von im und/oder am Antriebsgehäuse (2) erzeugter Wärme von den ersten Lamellen (3) über die zweiten Lamellen (4) zur Kurbelwelle (5) an die Kurbel (8, 9) und/oder
- Abführen der im und/oder am Antriebsgehäuse (2) erzeugten Wärme von den ersten Lamellen (3) über die zweiten Lamellen (4) zur Hohlwelle (6) an ein Kettenblatt (7).

## Claims

1. Electric drive device (1) for a bicycle, having a crankshaft (5) which is guided through a drive housing (2), wherein the drive housing (2) has first fins (3), **characterized in that** the first fins are arranged on the drive housing (2) within the drive housing (2), and the crankshaft (5) has second fins (4) which are mounted rotatably within the drive housing (2) for dissipating heat generated in the drive housing (2) to outside the drive housing (2), wherein the first fins (3) and the second fins (4) intermesh without contact.

2. Electric drive device (1) according to Claim 1, wherein the first fins (3) are arranged parallel to the second fins (4).

3. Electric drive device (1) according to either of the preceding claims, wherein the second fins (4) are arranged radially on the crankshaft (5).

4. Electric drive device (1) according to one of the preceding claims, wherein the electric drive device (1) has a crank (8, 9), and the second fins (4) are configured to output heat arising in and/or on the drive housing (2) from the first fins (3) via the crankshaft (5) to the cranks (8, 9) .

5. Electric drive device (1) according to one of the preceding claims, wherein a chain ring (7) which is connected to a hollow shaft (6) which at least partially projects into the drive housing (2) is arranged rotatably on the crankshaft (5).

6. Electric drive device (1) according to Claim 5, wherein the second fins (4) are arranged radially on the hollow shaft (6).

7. Electric drive device (1) according to Claim 6, wherein the chain ring (7) has cooling ribs.

8. Electric drive device (1) according to one of Claims 5 to 7, wherein the second fins (4) are configured to output heat arising in and/or on the drive housing (2) from the first fins (3) via the hollow shaft (6) to the chain ring (7).

9. Bicycle having an integrated electric drive device (1) according to one of the preceding claims.

10. Method for dissipating heat generated in the drive housing (2) of the electric drive device (1) according to one of the preceding claims to outside the drive housing (2), comprising the steps of:
- dissipating heat generated in and/or on the drive housing (2) from the first fins (3) via the second fins (4) to the crankshaft (5) and to the cranks (8, 9), and/or
- dissipating the heat generated oin and/or on the drive housing (2) from the first fins (3) via the second fins (4) to the hollow shaft (6) and to a chain ring (7).

## Revendications

1. Dispositif d'entraînement électrique (1) pour une bicyclette, comprenant un vilebrequin (5) guidé par un carter d'entraînement (2), le carter d'entraînement (2) comprenant des premières lamelles (3), **caractérisé en ce que** les premières lamelles sont disposées à l'intérieur du carter d'entraînement (2) sur le carter d'entraînement (2) et le vilebrequin (5) comprend des deuxièmes lamelles (4) qui sont montées de manière rotative à l'intérieur du carter d'entraînement (2) pour l'évacuation de la chaleur produite dans le carter d'entraînement (2) vers l'extérieur du carter d'entraînement (2), les premières lamelles (3) et les deuxièmes lamelles (4) s'emboîtant les unes dans les autres sans contact.

2. Dispositif d'entraînement électrique (1) selon la revendication 1, les premières lamelles (3) étant disposées parallèlement aux deuxièmes lamelles (4).

3. Dispositif d'entraînement électrique (1) selon l'une des revendications précédentes, les deuxièmes lamelles (4) étant disposées radialement sur le vilebrequin (5).

4. Dispositif d'entraînement électrique (1) selon l'une des revendications précédentes, le dispositif d'entraînement électrique (1) comprenant une manivelle (8, 9) et les deuxièmes lamelles (4) étant conçues pour évacuer la chaleur dégagée au niveau du carter d'entraînement (2) par les premières lamelles (3) par l'intermédiaire du vilebrequin (5) vers la manivelle (8, 9).

5. Dispositif d'entraînement électrique (1) selon l'une des revendications précédentes, un plateau (7), qui est relié avec un arbre creux (6), qui dépasse au moins partiellement dans le carter d'entraînement (2), étant disposé de manière rotative sur le vilebrequin (5).

6. Dispositif d'entraînement électrique (1) selon la revendication 5, les deuxièmes lamelles (4) étant disposées radialement sur l'arbre creux (6).

7. Dispositif d'entraînement électrique (1) selon la revendication 6, le plateau (7) comprenant des nervures de refroidissement.

8. Dispositif d'entraînement électrique (1) selon l'une des revendications 5 à 7, les deuxièmes lamelles (4) étant conçues pour évacuer la chaleur dégagée au niveau du carter d'entraînement (2) par les premières lamelles (3) par l'intermédiaire de l'arbre creux (6) vers le plateau (7).

9. Bicyclette comprenant un dispositif d'entraînement électrique (1) intégré selon l'une des revendications précédentes.

10. Procédé d'évacuation de la chaleur produite dans le carter d'entraînement (2) du dispositif d'entraînement électrique (1) vers l'extérieur du carter d'entraînement (2) selon l'une des revendications précédentes, comprenant les étapes suivantes :
- évacuation de la chaleur produite dans et/ou au niveau du carter d'entraînement (2) par les premières lamelles (3) par l'intermédiaire des deuxièmes lamelles (4) vers le vilebrequin (5) en direction de la manivelle (8, 9) et/ou
- évacuation de la chaleur produite dans et/ou au niveau du carter d'entraînement (2) par les premières lamelles (3) par l'intermédiaire des deuxièmes lamelles (4) vers l'arbre creux (6) en direction d'un plateau (7).
